# FASCICULE DE BREVET EUROPEEN

(11) **EP 1 795 618 B1**
(45) Date de publication et mention de la délivrance du brevet: **26.08.2009**
(21) Numéro de dépôt: 06125470.2
(22) Date de dépôt: 06.12.2006
(51) Int. Cl.: C21D 9/00, F16D 13/70

(54) **Procédé de fabrication d'une plaque d'embrayage notamment pour embrayage de motocyclette, et dispositif associé**
Herstellungsverfahren für eine Kupplungsplatte, insbesondere für Motorfahrradkupplung, und Vorrichtung
Method of manufacture for a clutch plate, in particular for motorcycles, and associated device

(30) Priorité: 06.12.2005 FR 0553747
(43) Date de publication de la demande: 13.06.2007
(73) Titulaire: Valeo Embrayages, 80009 Amiens (FR)
(72) Inventeur: Lopez-Perez, Carlos, 28005, Madrid (ES)
(74) Mandataire: Lemaire, Marc

(56) Documents cités:
- EP-A- 1 688 507
- US-A- 4 356 717
- US-A- 4 832 764

## Description

La présente invention se rapporte à un procédé de fabrication d'une plaque d'embrayage notamment pour embrayage de motocyclette, à un dispositif de mise en oeuvre de ce procédé et à une plaque d'embrayage obtenue par ce procédé.

Comme cela est connu en soi, un embrayage notamment de motocyclette comprend en particulier une pièce en acier souvent appelée « plaque d'embrayage », qui est fixée sur le vilebrequin et qui assure la transmission de couple entre ce vilebrequin et les autres composants de l'embrayage.

Un moteur de motocyclette peut tourner à des vitesses très élevées, typiquement jusqu'à 15000 tours/min, d'où il résulte que les pièces mécanique transmettant le couple du moteur sont soumises à des conditions d'usure et de fatigue particulièrement sévères.

C'est le cas notamment de la plaque d'embrayage, dont on a pu constater dans le passé qu'elle avait tendance à se désagréger et/ou à se casser au bout d'un certain temps, sous l'effet d'une part des efforts centrifuges considérables liés aux vitesses de rotation élevées du moteur, et d'autre part des acyclismes de ce moteur.

Le document US-A-4,356,717 décrit un procédé de fabrication d'un disque de frein ou d'un plateau d'embrayage par forgeage à la presse, comprenant une trempe sans revenu, dans lequel la trempe est réalisée à sec par circulation d'eau dans les plateaux de la presse.

La présente invention a notamment pour but de fournir une plaque d'embrayage présentant une résistance supérieure à celles de la technique antérieure, de manière à surmonter les inconvénients susmentionnés.

On atteint ce but de l'invention avec un procédé de fabrication d'une plaque d'embrayage notamment pour motocyclette, comprenant une étape de trempe et une étape de revenu, dans lequel ladite trempe est effectuée à sec dans une forme réfrigérée uniquement sur la partie centrale de ladite plaque d'embrayage.

Grâce à ce procédé, l'acier formant la plaque d'embrayage présente une forte cohésion granulaire, et sa limite élastique est nettement accrue, ce qui permet d'obtenir une plaque d'embrayage particulièrement résistante dont la partie périphérique est moins résistante que sa partie centrale.

Cette moindre résistance permet de faciliter notamment l'usinage de la partie périphérique de cette plaque postérieurement à la trempe et au revenu

Suivant une autre caractéristique optionnelle du procédé selon l'invention, avant les étapes de trempe et de revenu, on ajoure ladite plaque d'embrayage par emboutissage, puis, postérieurement aux étapes de trempe et de revenu, on arrondit les arêtes vives résultant de cet emboutissage.

La surpression de ces arêtes vives permet de supprimer des concentrations trop fortes de contraintes dans la plaque d'embrayage, et ainsi de contribuer à la durabilité de cette dernière.

Suivant d'autres caractéristiques optionnelles de ce procédé :
- on arrondit lesdites arêtes vives par frappage,
- on arrondit lesdites arêtes vives par repoussage.

La présente invention se rapporte également à une forme pour la mise en oeuvre d'un procédé conforme à ce qui précède, comprenant deux demi-formes définissant entre elles un espace correspondant à la géométrie de ladite plaque d'embrayage, chaque demi-forme comprenant des moyens d'échange thermique aptes à recevoir un fluide réfrigérant uniquement dans sa zone correspondant à la partie centrale de ladite plaque d'embrayage.

La présente invention se rapporte également à une plaque d'embrayage obtenue par un procédé conforme à ce qui précéde, ayant une limite élastique de la partie centrale supérieure à 700 MPa, et de préférence supérieure à 900 MPa.

La présente invention se rapporte également à une plaque d'embrayage obtenue par un procédé conforme à ce qui précède, présentant une partie périphérique de moindre résistance mécanique que sa partie centrale.

D'autres caractéristiques et avantages de la présente invention apparaîtront à la lecture de la description qui va suivre et à l'examen des figues annexées, dans lesquelles :
la figure 1 représente une vue en coupe axiale d'un embrayage de motocyclette comprenant une plaque d'embrayage selon l'invention,
- la figure 2 est une vue en perspective de cette plaque d'embrayage, et
- la figure 3 est une vue en coupe d'un dispositif permettant de fabriquer la plaque d'embrayage selon l'invention.

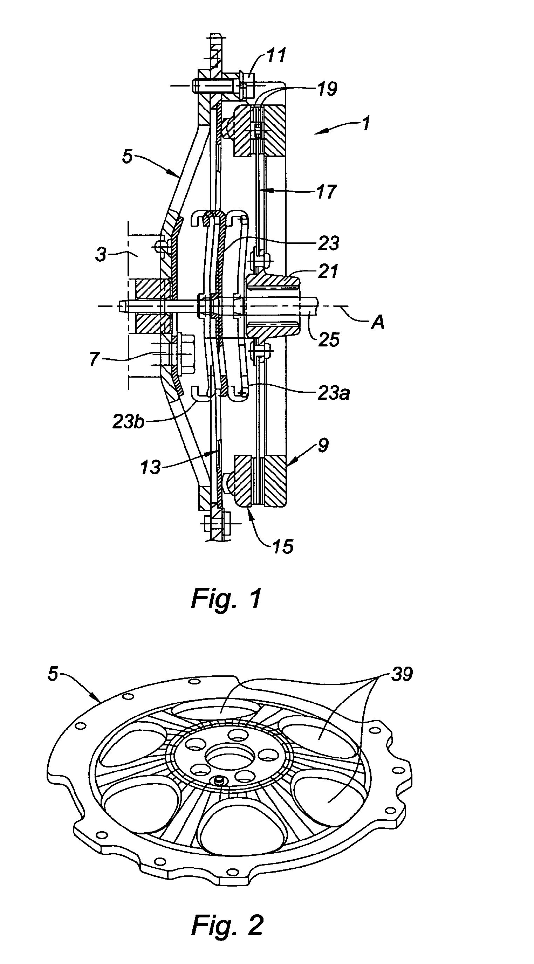

On se reporte à présent à la figure 1, sur laquelle on a représenté un embrayage 1 de motocyclette.

Cet embrayage est destiné à être positionné entre d'une part un vilebrequin 3 actionné par un moteur à explosion (non représenté) et d'autre part une boîte de vitesses (non représentée).

L'embrayage 1 comprend une plaque d'embrayage 5 fixée sur le vilebrequin 3 par exemple par des vis 7.

Un plateau d'appui fixe 9 est fixé sur la plaque d'embrayage 5 par des moyens appropriés telles que des vis 11.

Entre la plaque d'embrayage 5 et le plateau d'appui fixe 9 se trouve un diaphragme 13 et un plateau d'appui mobile 15 monté coulissant selon la direction de l'axe A de l'embrayage 1.

Un disque de friction 17 comportant à sa périphérie des garnitures 19 est interposé entre le plateau d'appui mobile 15 et le plateau d'appui fixe 9.

Comme cela est connu en soi, le moyeu 21 du disque de friction 17 est destiné à coopérer avec un arbre primaire de boîte de vitesses (non représenté).

Une bague d'embrayage 23 est montée rotative sur une tige axialement coulissante 25.

La périphérie de la bague d'embrayage 23 coopère avec le diaphragme 13, de manière à pouvoir solliciter celui-ci axialement en direction du vilebrequin 3, tout en demeurant bloquée en rotation par rapport à ce diaphragme.

Le mode de fonctionnement de l'embrayage qui vient d'être décrit résulte directement de la description qui précède.

Lorsqu'aucune sollicitation axiale n'est imposée à la tige coulissante 25, la bague d'embrayage 23 se trouve dans la position 23a visible sur la figure 1.

Dans cette position, la bague d'embrayage 23 n'exerce aucun effort axial sur le diaphragme 13, lequel peut alors exercer, en raison de son élasticité propre, un effort de poussée axiale maximal sur le plateau mobile 15, ce qui a pour effet de pincer la friction 17 entre ce plateau mobile et le plateau fixe 9.

Dans cette configuration, le couple du vilebrequin 3 est donc transmis à la friction 17 et au moyeu 21 : l'embrayage est en position embrayée.

Lorsqu'on exerce un effort de poussée axiale sur la tige 25 en direction du vilebrequin 3, la bague d'embrayage 23 atteint la position 23b, ce qui a pour effet d'écarter le diaphragme 13 du plateau mobile 15, et ainsi de libérer l'effort de pincement exercé sur la friction 17.

Dans cette configuration, le couple du vilebrequin 3 n'est plus transmis à la friction 17 : l'embrayage se trouve en position débrayée.

Que cet embrayage se trouve en position embrayée ou débrayée, la plaque d'embrayage 5 tourne en permanence avec le vilebrequin 3, à la vitesse du moteur.

Cette vitesse peut être très élevée, et atteindre typiquement 15 000 tours/min.

En raison de cette vitesse très élevée, la plaque d'embrayage 5 est soumise à des sollicitations mécaniques (force centrifuge, acyclismes...) considérables.

Pour cette raison, il importe de fabriquer la plaque d'embrayage 5 (visible de manière particulière sur la figure 2) selon un procédé qui lui confère une résistance particulièrement grande.

Ce procédé consiste à soumettre la plaque d'embrayage 5 à une trempe, c'est-à-dire à un refroidissement brutal dès sa sortie d'un moule de fonderie, et à faire suivre cette trempe d'un revenu, c'est-à-dire d'un passage de cette plaque au four.

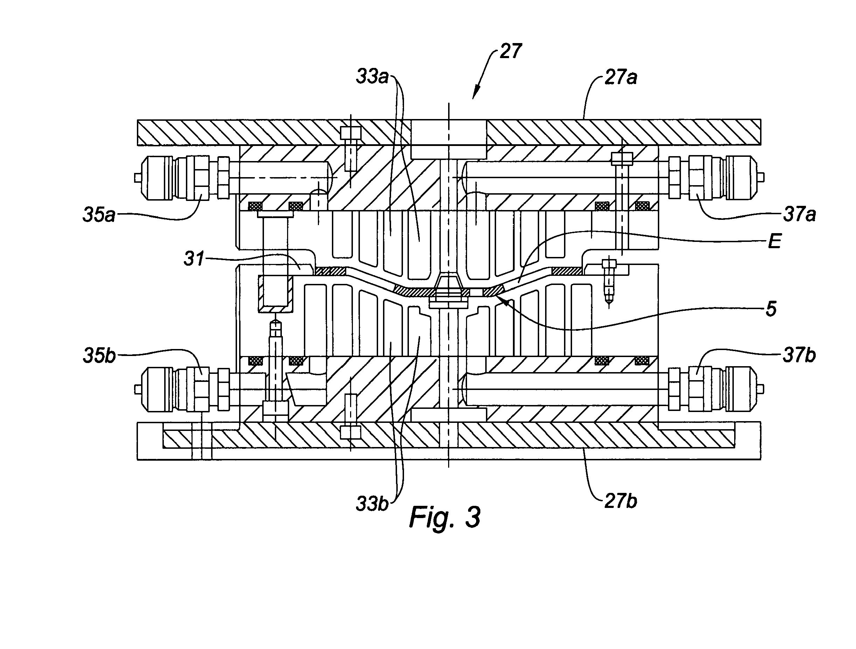

Plus particulièrement, dans le cadre de la présente invention, l'opération de trempe de la plaque 5 est effectuée à l'intérieur d'une forme réfrigérée dont un exemple de réalisation est visible sur la figure 3.

On entend par forme dans le cadre de l'invention un dispositif permettant de conserver les caractéristiques dimensionnelles de la plaque d'embrayage durant le procédé selon l'invention.

Cette forme 27 comprend deux demi-formes 27a, 27b délimitant entre elles un espace E correspondant exactement aux dimensions de la plaque d'embrayage 5. On notera en particulier que l'une 27b de ces deux demi-formes comporte un épaulement annulaire radial 31.

Chaque demi-forme 27a, 27b comprend des cavités 33a, 33b aptes à recevoir un fluide réfrigérant arrivant par des conduites d'entrée respectives 35a, 35b, et sortant par des conduites de sortie respectives 37a, 37b.

La forme réfrigérée 27 permet de refroidir la plaque d'embrayage 5 en empêchant toute variation dimensionnelle de cette plaque, et de lui conférer une résistance mécanique exceptionnelle.

Cette résistance mécanique provient d'une forte cohésion entre les grains de matière formant l'acier de cette plaque, cette cohésion étant visible notamment sur des couples micrographiques.

Lorsqu'on soumet une éprouvette de l'acier ainsi traité à un essai de traction, on a pu mesurer que sa limite élastique était supérieure à 700 MPa et en particulier supérieure à 900 MPa.

On comprend au vu des explications qui précèdent que si au moins l'une des trois conditions suivantes est satisfaite, on peut affirmer qu'une plaque d'embrayage a été fabriquée selon le procédé de l'invention :
- forte cohésion entre les grains de l'acier formant la plaque,
- limite élastique supérieure à 700 MPa et en particulier supérieure à 900 MPa, et
- grande constance dimensionnelle d'une plaque à l'autre.

En complément des explications qui précèdent, il faut noter qu'il importe d'ajourer la plaque d'embrayage 5 afin de l'alléger.

On forme à cet effet une pluralité de trous, et typiquement six trous 39 répartis régulièrement sur la plaque d'embrayage 5 (voir figure 2).

Ces trous 39 sont formés avant les opérations de trempe et de revenu décrites plus haut, de préférence par emboutissage.

Postérieurement à ces opérations de trempe et de revenu, les arrêtes vives tant à l'intérieur que sur les bords de ces trous sont arrondis par un procédé connu en soi tel que le frappage (outil tapant dans les trous) ou le repoussage (roulette circulant sur le bord des trous).

Le fait de réaliser des trous à bords arrondis permet de limiter les concentrations de contraintes dans l'acier formant la plaque d'embrayage 5, et ainsi de supprimer les risques de ruptures prématurées de cette plaque.

Bien entendu, la présente invention n'est nullement limitée à l'exemple décrit et représenté, fourni à titre uniquement illustratif.

C'est ainsi par exemple que l'on peut envisager de ne tremper qu'une partie de la plaque d'embrayage 5, et plus particulièrement uniquement sa partie centrale, c'est-à-dire sa partie située radialement à l'intérieur des trous 39.

On notera que seul un trempage à sec au moyen d'une forme réfrigérée du type que celle qui a été décrite plus haut, permet de réaliser un tel trempage partiel : il suffit de faire circuler un liquide réfrigérant uniquement dans les zones des deux demi-formes qui sont destinées à coopérer avec la partie centrale de la plaque d'embrayage.

Le fait de ne tremper que la partie centrale de la plaque d'embrayage 5 permet de rendre la partie périphérique de cette plaque moins résistante que sa partie centrale.

Cette moindre résistance permet de faciliter notamment le frappage ou le repoussage des trous 39 postérieurement à la trempe et au revenu.

La tenue mécanique globale de la plaque d'embrayage ne s'en trouve pas affectée, étant donné qu'en réalité, c'est sa partie centrale qui est la plus sollicitée.

## Revendications

1. Procédé de fabrication d'une plaque d'embrayage (5) notamment pour motocyclette, comprenant une étape de trempe et une étape de revenu, dans lequel ladite trempe est effectuée à sec dans une forme réfrigérée (27) uniquement sur la partie centrale de ladite plaque d'embrayage (5).

2. Procédé selon la revendication 1, dans lequel, avant les étapes de trempe et de revenu, on ajoure laite plaque d'embrayage (5) par emboutissage, puis, postérieurement aux étapes de trempe et de revenu, on arrondit les arêtes vives résultant de cet emboutissage.

3. Procédé selon la revendication 2, dans lequel on arrondit lesdites arêtes vives par frappage.

4. Procédé selon la revendication 2, dans lequel on arrondit lesdites arêtes vives par repoussage.

5. Forme (27) pour la mise en oeuvre d'un procédé conforme à l'une quelconque des revendications précédentes, comprenant deux demi-formes (27a, 27b) définissant entre elles un espace (E) correspondant à la géométrie de ladite plaque d'embrayage (5), chaque demi-forme (27a, 27b) comprenant des moyens d'échange thermique (33a, 33b) aptes à recevoir un fluide réfrigérant uniquement dans sa zone correspondant à la partie centrale de ladite plaque d'embrayage.

6. Plaque d'embrayage (5) obtenue par un procédé conforme à l'une quelconque des revendications 1 à 4, dans laquelle la partie centrale de ladite plaque d'embrayage(s) présente une limite élastique supérieure à 700 MPa, et de préférence supérieure à 900 MPa.

7. Plaque d'embrayage (5) obtenue par un procédé conforme à l'une des revendications 1 à 4, présentant une partie périphérique de moindre résistance mécanique que sa partie centrale.

## Claims

1. Method of manufacture for a clutch plate (5), in particular for motorcycles, comprising a chilling step and a tempering step, wherein said chilling is carried out dry in a refrigerated mould (27) only on the central part of said clutch plate (5).

2. Method according to claim 1, wherein, before the chilling and tempering steps, said clutch plate (5) is perforated by stamping, then, subsequently to the chilling and tempering steps, the sharp edges resulting from this stamping are rounded.

3. Method according to claim 2, wherein said sharp edges are rounded by beating.

4. Method according to claim 2, wherein said sharp edges are rounded by spinning.

5. Mould (27) for implementing a method according to anyone of the above claims, comprising two half-moulds (27a, 27b) defining between them a space (E), corresponding to the geometry of said clutch plate (5), each half-mould (27a, 27b) comprising heat transfer means (33a, 33b), capable of receiving a refrigerating fluid, only in its zone corresponding to the central part of said clutch plate.

6. Clutch plate (5) obtained by a method according to anyone of claims 1 - 4, wherein the central part of said clutch plate (5) has a limit of elasticity greater than 700 MPa, and preferably greater than 900 MPa.

7. Clutch plate (5) obtained by a method according to anyone of claims 1 - 4, having a peripheral part of less mechanical strength than its central part.

## Patentansprüche

1. Verfahren zur Herstellung einer Kupplungsscheibe (5) insbesondere für ein Motorrad, umfassend einen Härtungs-Schritt und einen Anlass-Schritt, wobei die besagte Härtung trocken in einer gekühlten Form (27) nur auf dem Mittelteil der besagten Kupplungsscheibe (5) durchgeführt wird.

2. Verfahren nach Anspruch 1, wobei die besagte Kupplungsscheibe (5) vor den Härtungs- und Anlass-Schritten durch Tiefziehen durchbrochen wird und dann, nach den Härtungs- und Anlass-Schritten die scharfen Kanten abgerundet werden, die aus diesem Tiefziehen resultieren.

3. Verfahren nach Anspruch 2, wobei die scharfen Kanten durch Prägen abgerundet werden.

4. Verfahren nach Anspruch 2, wobei die scharfen Kanten durch Drücken abgerundet werden.

5. Form (27) zur Durchführung des Verfahrens nach einem der vorherigen Ansprüche, umfassend zwei Halbformen (27a, 27b), die zwischen sich einen der Geometrie der besagten Kupplungsscheibe (5) entsprechenden Raum (E) definieren, wobei jede Halbform (27a, 27b) Wärmetauschmittel (33a, 33b) aufweist, die geeignet sind, ein kühlendes Fluid nur in der Zone aufzunehmen, welche dem Mittelteil der besagten Kupplungsscheibe entspricht.

6. Kupplungsscheibe (5), erhalten durch ein Verfahren nach einem der Ansprüche 1 bis 4, wobei der Mittelteil der besagten Kupplungsscheibe (5) eine Elastizitätsgrenze von über 700 MPa, vorzugsweise von über 900 MPa aufweist.

7. Kupplungsscheibe (5), erhalten durch ein Verfahren nach einem der Ansprüche 1 bis 4, mit einem Umfangsteil von geringerer mechanischer Resistenz als ihr Mittelteil.
